Europäisches Patentamt

European Patent Office

Office européen des brevets

(11) Publication number: **0 172 722**
**B1**

(12) **EUROPEAN PATENT SPECIFICATION**

(45) Date of publication of patent specification: **16.05.90**

(21) Application number: **85305769.3**

(22) Date of filing: **14.08.85**

(51) Int. Cl.⁵: **H 04 N 9/24, H 01 J 29/70**

(54) Apparatus for controlling the position of a scanning electron beam in a CRT display.

(30) Priority: **20.08.84 US 642222**

(43) Date of publication of application:
**26.02.86 Bulletin 86/09**

(45) Publication of the grant of the patent:
**16.05.90 Bulletin 90/20**

(84) Designated Contracting States:
**DE FR GB IT**

(56) References cited:
**EP-A-0 039 832**
**EP-A-0 053 207**
**US-A-2 757 313**
**US-A-3 383 547**

(73) Proprietor: **International Business Machines Corporation**
**Old Orchard Road**
**Armonk, N.Y. 10504 (US)**

(72) Inventor: **Turner, John Alan**
**13 Station Road**
**Earls Colne Essex (GB)**

(74) Representative: **Atchley, Martin John Waldegrave**
**IBM United Kingdom Limited Intellectual Property Department Hursley Park**
**Winchester Hampshire SO21 2JN (GB)**

Courier Press, Leamington Spa, England.

## Description

The present invention relates to an apparatus for controlling the position of a scanning electron beam in a cathode ray tube (CRT) display and, more particularly, to an apparatus and a method for controlling the vertical position of one or more scanning electron beams in a colour CRT display accurately in order to maintain the beam (or beams) along a predetermined scanning path on a colour phosphor.

Apparatus for correcting the scanning position of multiple electron beams in a colour television display tube is disclosed in United States Patent Specification US—A—3,383,547. In this patent specification, a number of sets of red, green and blue phosphor bars, wherein each set is separated by a conducting strip, are arranged on the face of a television receiving tube. In the tube, five collimated electron beams are produced for scanning over the face of the tube. The two outer electron beams are set to track along corresponding ones of the conducting strips, while the three inner electron beams each scans a respective one of the red, green and blue phosphor bars. A modulation signal is imposed on one of the outer beams, and a corresponding signal of opposite phase is imposed on the other one of the outer beams. Accordingly, when the two outer beams each strike a conducting strip, no resultant signal is detected at a common conducting strip electrode. Should the collimated beams deviate from the desired scanning paths, an imbalance is detected with respect to the degree to which the two outer electron beams impinge on the conducting strips, and a correction signal is applied to a vertical deflection circuit associated with the tube.

Other known arrangements wherein conductive strips or gratings are formed on the inner surface of a CRT face plate are shown in United States Patent Specifications US—A—2,739,260 and US—A—3,569,760. An arrangement wherein the instantaneous position of an electron beam is obtained during each horizontal line scan by the use of a series of vertically aligned conductive strips, is disclosed in an article entitled "An Electron Beam Indexing Colour Display System" by J. A. Turner, in Displays (British) (October 1979). All of these systems, however, are directed primarily to arrangements for enabling a single electron beam to produce a colour television picture of suitable quality, and are not concerned with the vertical positional alignment of one or more electron beams during scanning in a cathode-ray tube.

US—A—2757313 describes apparatus for controlling the position of a scanning electron beam in a cathode ray type display. The electron beam is directed to and deflected over a surface of the cathode ray tube on which are formed strips of a light emitting phosphor. On each side of each phosphor strip is formed a conductive strip which is also scanned by the beam as it scans over the phosphor strip. The electron beam is modulated with a high frequency signal. A detector circuit detects the signal in each conductive strip from the modulations in the beam.

When the beam scans correctly along each phosphor strip the signals in the conductive strips adjacent to the strip are equal. If the beam deviates from the correct path the signals in the two strips are different and a control signal is generated to move the beam back into the correct path.

The signals in the conductive strips are in phase. The detector circuit includes a bridge circuit to detect differences in the amplitudes of the signals in the conductive strips.

The object of the present invention is to provide an improved apparatus for controlling the position of one or more scanning electron beams in a cathode-ray tube display, so that the beams accurately track along predetermined paths over a light emitting phosphor in the tube.

According to the invention apparatus for controlling the position of a scanning electron beam in a cathode-ray tube display of the type having a light emitting phosphor coating on an inner surface of a face plate of the tube comprises

electron gun means associated with the cathode-ray tube for producing an electron beam of desired intensity, deflecting means associated with the cathode-ray tube for deflecting the electron beam so that the electron beam scans substantially along a predetermined path over the phosphor coating, the phosphor coating emitting light the intensity of which corresponds to a condition of the electron beam at each point on the phosphor coating along which the electron beam scans,

a series of spaced apart parallel conductive strips on the face plate of the tube or on the phosphor coating, located so that the spaces between the conductive strips coincide with the predetermined path along which the electron beam is to be scanned,

pilot signal generating means coupled to the electron gun means for modulating the electron beam with a predetermined pilot signal,

detecting means coupled to the conductive strips for detecting the pilot signal in the event the electron beam deviates from the predetermined path and impinges on one of the conductive strips by an amount greater than the amount by which the electron beam impinges on an adjacent conductive strip along the predetermined path,

a control signal generator for generating a position control signal corresponding to the position of the electron beam, and

beam position correction means coupled to the control signal generator and to the deflecting means for returning the electron beam to the predetermined path in response to the position control signal.

According to the invention the apparatus is characterised in that the control signal generator comprises means for generating two oppositely phased signals in response to the modulated electron beam impinging on the adjacent electrically conductive strips, and means for generating the positional control signal in accordance with the difference in amplitude of the two oppositely phased signals.

In order that the invention may be more readily understood an embodiment will now be described with reference to the accompanying drawings, in which:

Figure 1 is a block diagram of part of a colour television receiving system, including a schematic representation of beam position control apparatus according to the invention,

Figure 2 is a schematic representation of a portion of the beam position control apparatus illustrated in Figure 1 showing corrective positioning of an electron beam,

Figure 3 is a schematic representation of the beam position control apparatus illustrated in Figure 1, showing phase delays and resultant output voltages produced in the apparatus,

Figure 4 is a side view in cross-section of the end face of a cathode ray tube showing colour phosphors and conductive strips according to a first embodiment of the invention,

Figure 5 is a side view in cross-section of the end face of a cathode ray tube showing colour phosphors and conductive strips according to another embodiment of the invention,

Figure 6 is a front view of a portion of a colour CRT face including guard strips between strips or bars of colour phosphors in accordance with the embodiment illustrated in Figure 5, and

Figure 7 is a front view as in Figure 6, showing non-luminescing lines at certain intervals.

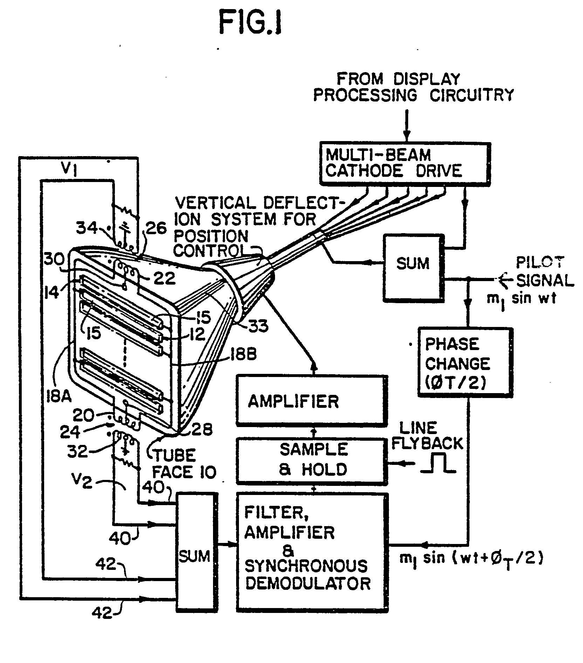

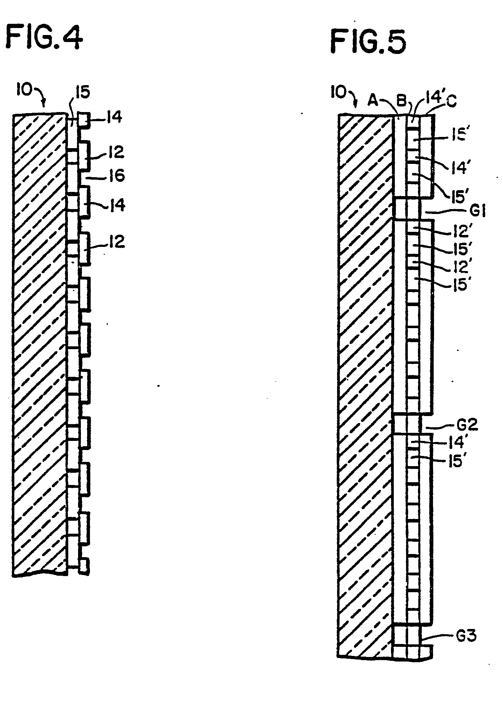

Figures 1, 2, 3 and 4 illustrate parts of a colour television receiving system which includes apparatus in accordance with the invention for controlling the position of an electron beam 33 while scanning the face 10 of a cathode-ray tube (CRT) display. Specifically, two groups of spaced, horizontal conductive strips 12, 14 are arranged in a first plane, adjacent to a conventional group of phosphor strips 15 arranged in an immediately adjacent plane, the latter being on the inner surface of the tube (Figure 4). The strips 12 and 14 are provided in an interdigital configuration as seen. The strips 12 and 14 are parallel to one another and adjacent strips are spaced apart so as to form a relatively small gap 16. Each gap 16 coincides with the desired path of scan of the electron beam 33.

The conductive strips may be, for example, Indium Oxide or Tin Oxide, or a combination of such oxides, or other substantially transparent conductive materials. The preferred arrangment, for example, comprises interdigitated strips of aluminium, or some other substantially conductive and electron transparent material, positioned immediately behind light-emitting phosphors so that the electron beam passes through the conductive strips 12 and 14 before striking the light-emitting phosphors 15. Conductive end contact strips 18A and 18B are arranged to connect corresponding ends of the sets of conductive strips 12, 14 to primary, centre-tapped windings 20, 22 of signal coupling transformers 24, 26, respectively, as shown in Figure 1.

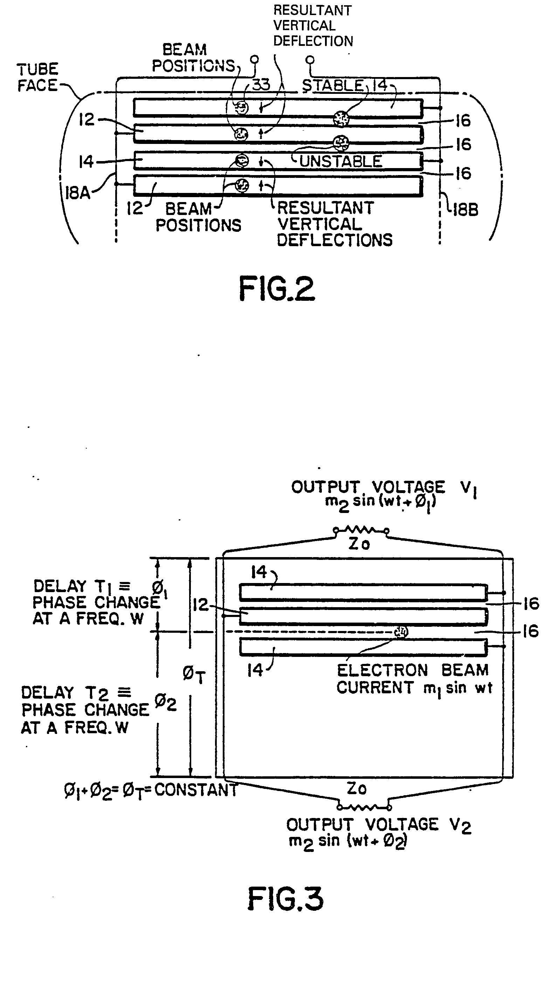

As explained in detail below, the transformers 24, 26 operate so as (a) to transform positional information signals, developed when the electron beam (Figure 2) impinges on one of the conductive strips 12 by an amount greater than the amount by which the beam impinges on an adjacent one of the conductive strips 14, into a corresponding position control signal, and (b) to provide electrical isolation between a high voltage potential which may be applied to centre-tap terminals 28, 30 of the primary windings 20, 22, respectively, and the ground reference of electronic processing circuitry coupled to centre-tapped secondary windings 32, 34 of the transformers 24, 26, respectively. As shown in Figure 1, the centre-taps of the secondary windings 32, 34 are each grounded.

Positioning of the electron beam 33 during a horizontal line scan, as viewed in Figure 1, is controlled, in the vertical direction only, as follows:

The electron beam 10 is modulated in amplitude by a sinusoidal pilot signal $m_1 \sin wt$ as depicted in Figure 1. It will be apparent from Figure 1 that when the electron beam 33 falls on any of the conductive strips 12, a corresponding signal will be induced in a part of the secondary windings 32, 34 so as to produce a signal in the form $m_2 \sin wt$ at secondary winding terminals 40, 42. When the electron beam 33 impinges or falls on any of the conductive strips 14, a signal is produced at the secondary winding terminals 40, 42 in the form of $-m_2 \sin wt$.

The signal $m_2 \sin wt$ after suitable demodulation and amplification is used to produce a downward vertical deflection of the electron beam 33, and the signal $-m_2 \sin wt$ is used to produce an upward vertical deflection of the electron beam 33. Accordingly, a stable vertical position for the electron beam 33 is possible only when the pilot signal $m_1 \sin wt$ is divided substantially equally between adjacent ones of the conductive strips 12, 14. That is, when the electrode beam 33 impinges on adjacent strips 12, 14 by equal amounts, the signals produced at the secondary winding terminals 40, 42 become equal so that no net corrective vertical deflection is imposed on the scanning electron beam 33.

Figure 2 shows both stable and unstable equilibrium positions which result from the use of a pilot signal of the form $m_1 \sin wt$. The stable and the unstable equilibrium positions will be interchanged if a pilot signal of the form of $-m_1 \sin wt$ is used. In a typical embodiment of the invention, it is contemplated that consecutive line scans will use phase reversal of the pilot signal (i.e. $m_1 \sin wt$, $-m_1 \sin wt$, $m_1 \sin wt$, $-m_1 \sin wt$, etc.) thus allowing stable equilibrium of the vertical beam position to be achieved over consecutive gaps 16 between the conductive strips 12, 14.

Vertical deflection of the electron beam 33, whether by magnetic or electrostatic means, will, in the typical embodiment, result from the synchronous demodulation of the transformer output signals $\pm m_2 \sin wt$. Synchronous demodulation is formed by multiplying the signal $\pm m_2 \sin wt$ by the sinusoidal pilot signal $m_1 \sin wt$, as follows:

$$m_1 \sin wt \times m_1 \sin wt = \frac{m_1 m_2}{2} (1-\cos 2wt)$$

$$m_1 \sin wt \times -m_1 \sin wt = \frac{m_1 m_2}{2} (1-\cos 2wt)$$

Elimination of the high frequency component cos2wt by appropriate filtering leaves the base-band signal

$$\pm \frac{m_1 m_2}{2}$$

available for vertical electron beam position control.

Vertical scanning of the electron beam 33 as it is swept across the tube face to produce a viewable picture, may be effected by (a) linear (analog) deflecting currents or voltages, or (b) non-linear (staircase) deflecting currents or voltages. In either case (a) or case (b) the angular positioning of the deflection means would be such as to allow the electron beam 33 to scan during a scan line substantially parallel to the long edges of the conductive strips 12, 14. This will minimise the control voltages or currents necessary for corrective vertical position control.

At the end of a horizontal scanning line, and while the electron beam 33 is under vertical position control, the control signal (e.g. the base-band signal

$$\pm \frac{m_1 m_2}{2} )$$

is analog or digitally stored, so that, after line flyback, the vertical error to be corrected will be minimised, thus allowing relatively fast movement of the electron beam 33 to a new stable vertical position.

With respect to the magnitude of the positional error signal, such signal may be defined as:

$$V_{PE} = \frac{V_E\%}{n} \times \frac{t_f}{t_s}$$

where $V_E\%$ is the vertical scanning error percentage, n is the number of horizontal scans per field scan, $t_f$ is the time for line flyback, and $t_s$ is the time for one horizontal scan including flyback.

Using typical values, $V_E\% = \pm 5\%$, n = 50, and $t_f/t_s = 0.2$, then $V_{PE} = \pm 1/50\%$ thus indicating that the required vertical correction or pull-in signal from line to line will be 1/5,000 of the peak to peak vertical scanning signal.

The distributed inductance and capacitance of the inter-digitated conductive strips 12, 14 result in phase changes $\Phi_1$ and $\Phi_2$ of the modulating electron beam current $m_1 \sin wt$ as shown in Figure 3. The effects of variable phases $\Phi_1$ and $\Phi_2$ can be minimised by adding together output voltages $V_1$ and $V_2$ as follows:

$$m_2 \sin (wt + \Phi_1 + m_2 \sin (wt + \Phi_2) =$$

$$2 \cos \left(\frac{\Phi_1 - \Phi_2}{2}\right) \sin (wt + \frac{\Phi_T}{2})$$

Since $\Phi_T$ is constant, synchronous demodulation can be performed using a modified reference signal $m_1 \sin (wt + \Phi_T)$ thereby maximising the composite output signal.

Amplitude variability due to the term 2 cos

$$\frac{\Phi_1 - \Phi_2}{2}$$

is a function of

$$\frac{\Phi_1 - \Phi_2}{2}$$

4

which has a maximum value of

$$\frac{\Phi_T}{2}$$

If the pilot frequency (maximum) is chosen so that $\Phi_T = 120°$, the maximum variation of the amplitude term

$$2 \cos \left(\frac{\Phi_1 - \Phi_2}{2}\right)$$

is 2:1, noting that $\cos 0 = 1$ (when $\Phi_1 = \Phi_2$), and $\cos (120/2) = 0.5$ (when $\Phi_1 = \Phi_T$, $\Phi_2 = 0$). In this manner, a usable control signal amplitude can be obtained from the whole of the CRT tube face.

It will be understood, as shown in Figure 3, that each of the output voltages $V_1$ and $V_2$ must be terminated in the characteristic impedance ($Z_o$) of the interdigitated conductive strips 12, 14, in order to prevent reflections from modifying the phase and amplitude of the output voltages.

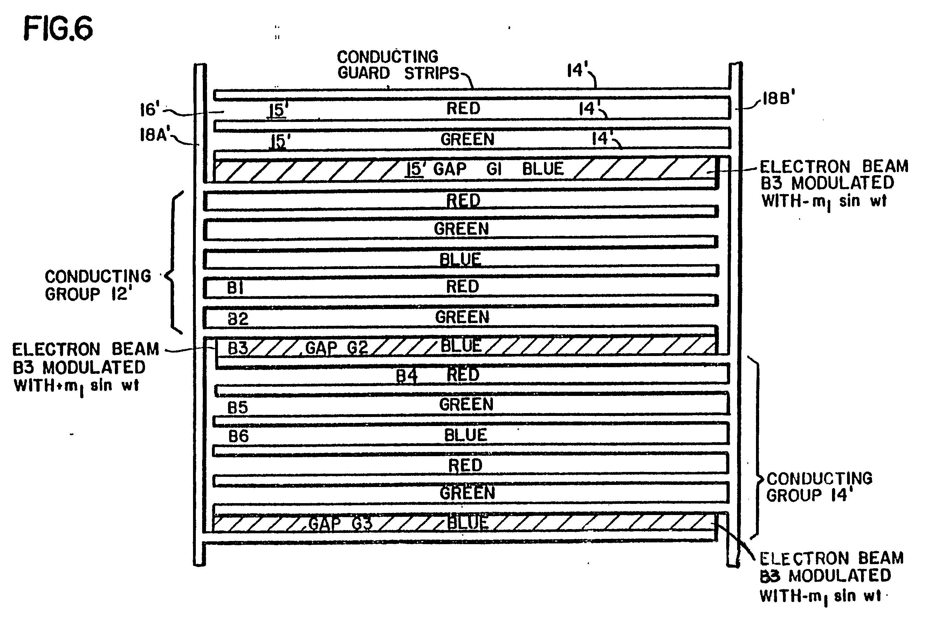

Figure 5 is a vertical cross-section of a CRT tube face for an alternative embodiment of the invention, illustrating three layers of horizontal conductive strips A, B and C which, individually or in combination, can be used to pick-up or detect one or more incident electron beams so as to provide positional information for correcting the position of the electron beams in the vertical direction. The combinations of the layers of interdigitated conductive strips suitable for such position control are: A, or B, or C, or [A and B], or [C and B]. It should be noted that: A consists of horizontal strips of substantially light transparent and electrically conducting material; B consists of alternate horizontal strips of substantially light transparent and electrically conducting materials; B consists of alternate horizontal strips of phosphor and electrically conducting guard strips, the guard strips being substantially light-absorbing; C consists of horizontal strips of electrically conducting and substantially electron transparent material (for example: aluminium).

A preferred construction includes only the conductive guard strips in layer B, that is, the guard strips 14' between red, green and blue phosphors 15' in the case of a colour CRT. Use of the guard strips in the layer B is advantageous for the following reasons:

(a) Fewer fabrication steps,

(b) Guard strips between the phosphors are necessary to prevent colour desaturation as the electron beam spot diameter varies,

(c) The guard strips can be highly conductive as required, since they do not need to be transparent to visible radiations,

(d) The absence of the strip layers A and/or C leaves the viewed screen of the CRT symmetrical and without spatial differences other than the red, green and blue phosphor repeating lines.

Although the present invention may be applied to monochrome display systems wherein a CRT having a single electron beam is used for scanning a monochrome phosphor, as in the first embodiment illustrated in Figures 1 to 4, it will be appreciated that the invention may be gainfully applied to systems wherein multiple electron beams are used for colour display systems such as, e.g., 3n electron beams wherein n is a positive integer. Specifically, in the case of a colour graphics display system wherein six electron beams may scan two sets of three different coloured phosphor lines simultaneously, the phosphor and guard strip layer B of Figure 5 can appear as shown in Figure 6. Rather than being connected alternately to conductive edge strips 18A' and 18B', the series of guard strips are arranged as interdigitated groups of strips wherein a first conductive group 12' of six successive strips are each connected to the edge strip 18A', and a second conductive group 14' of six successive strips are each connected to the edge strip 18B'. A particular colour phosphor, for example, a blue phosphor, appears repeatedly in successive gaps 16' between adjacent conductive strips (guard strips). The number of conductive strips in a conductive group will, in the case of a colour graphics system, consist of 3m strips where n = m and 3n electron beams are used in the CRT.

Gaps G1, G2, G3 etc. between adjacent conductive groups 12', 14' preferably should be associated with the least visible cathode luminescent phosphor (for example, a blue phosphor in the case of using red, green and blue phosphors for the display).

In the arrangement illustrated in Figure 6, even numbered gaps G2, G4, G6, etc. will be associated with electron beams modulated by a pilot signal in the form $m_1 \sin wt$, whereas intermediate or odd numbered gaps G1, G3, G5 etc. will be associated with electron beamns modulated by a pilot signal of $-m_1 \sin wt$. Such pilot signal modulations can exist during a single line scan or consecutive line scans and may exist singly or in combination.

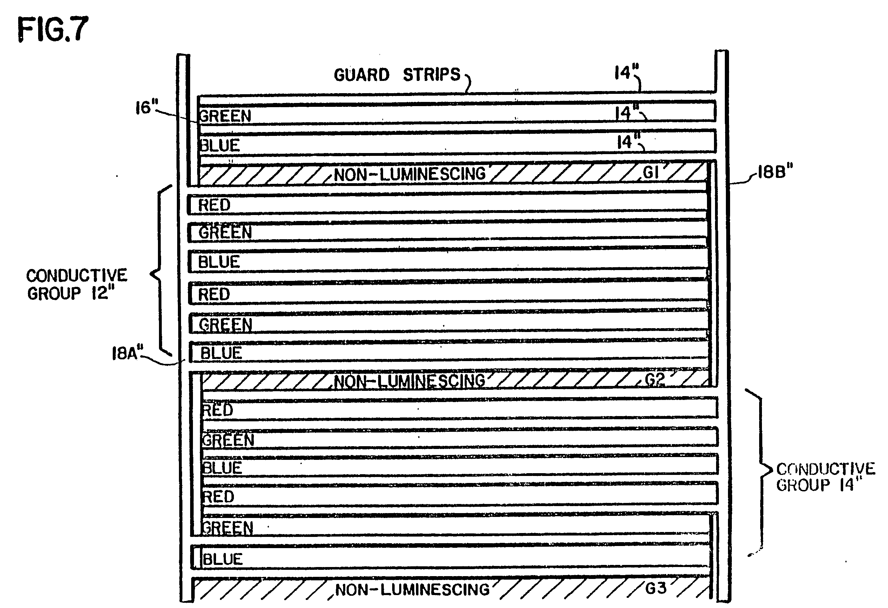

Figure 7 shows another CRT face structure wherein guard strips between successive differently coloured phosphors are arranged in conductive groups 12", 14" which groups are interdigitated and connected to corresponding edge strips 18A" and 18B". The arrangement of Figure 7 is suitable for the presentation of alphanumeric characters, i.e., horizontal rows of characters separated by a non-light emitting horizontal strip. In Figure 7, multiple triplets of red, green and blue phosphors are used to produce coloured characters on the screen of the CRT. The non-luminescing strips, separating the groups of R, G, B colour phosphors, comprise gaps G1, G2, G3, etc. The gaps also separate the conductive groups 12", 14".

Since the gaps are associated with an electron beam modulated only by a pilot signal, and since there is no light output from the non-luminescing strip, the pilot beam electron current may be significantly higher than that used in a colour graphic display. Such feature significantly improves the signal-to-noise ration.

The use of a pilot signal together with a video signal to be modulated on a scanning electron beam requires that a technique be available to detect the pilot signal in the presence of the video waveform. Assume a video waveform which consists of a pulse of constant width (t seconds), repeated every T seconds. The Fourier Transform of such a waveform consists of spectral lines separated by 1/T Hz. Some of the spectral lines have zero amplitude, such lines being located at frequencies of 1/t Hz, 2/t Hz, 3/t Hz . . . etc. Therefore, any one of these frequencies can be used to locate the pilot frequency. For example, if the video waveform pulse has a duration of 0.1 μsec, the pilot frequency can be located at 10 MHz, or 20 MHz, or 30 MHz, etc.

Accordingly, in the case of a CRT colour display system wherein multiple electron beams are used to scan phosphors of different colours, the position control apparatus of the present invention will allow simultaneous illumination of, for example, triplets of red, green and blue phosphor lines so as to produce an accurate full colour display.

It will be appreciated that the apparatus of the present invention provides significant advantages over known methods of producing colour displays, such as follows:

(a) Compared with shadow mask or aperture grill CRTs elimination of the shadow mask or aperture grill as in the present invention allows a brightness factor increase of up to five times;

(b) compared with single gun beam indexing arrangements of the type which use vertically aligned phosphor strips, the present invention employs horizontal strips, thus enabling improvement in brightness, no limitations on line scan linearity variations, no limitations on video signal rise and fall times, and no requirements or restrictions on picture element rates.

**Claims**

1. Apparatus for controlling the position of a scanning electron beam (33) in a cathode-ray tube display of the type having a light emitting phosphor coating (15) on an inner surface of a face plate (10) of the tube comprising

electron gun means associated with said cathode-ray tube for producing an electron beam (33) of desired intensity,

deflecting means associated with said cathode-ray tube for deflecting said electron beam (33) so that said electron beam scans substantially along a predetermined path over said phosphor coating (15), said phosphor coating emitting light the intensity of which corresponds to a condition of said electron beam at each point on said phosphor coating along which said electron beam scans,

a series of spaced apart parallel conductive strips (12, 14) on said face plate (14) of said tube or on said phosphor coating (15), located so that the spaces between said conductive strips (12, 14) coincide with said predetermined path along which said electron beam is to be scanned,

pilot signal generating means coupled to said electron gun means for modulating said electron beam (33) with a predetermined pilot signal,

detecting means (24, 26) coupled to said conductive strips (12, 14) for detecting said pilot signal in the event said electron beam (33) deviates from said predetermined path and impinges on one of said conductive strips by an amount greater than the amount by which the electron beam impinges on an adjacent conductive strip along said predetermined path, and

a control signal generator for generating a position control signal corresponding to the position of said electron beam, and

beam position correction means coupled to said control signal generator and to said deflecting means for returning said electron beam to said predetermined path in response to said position control signal, characterised in that said control signal generator comprises

means (20, 32; 22, 34) for generating two oppositely phased signals ($m_2$ sin wt; $-m_2$ sin wt) in response to said modulated electron beam impinging on said adjacent electrically conductive strips (12, 14) and

means for generating said positional control signal in accordance with the difference in amplitude of said two oppositely phased signals.

2. Apparatus according to claim 1, characterised in that said control signal generator includes a pair of transformers (24, 26) each comprising a centre-tapped primary winding (20, 22) connected to said parallel conductive strips (12, 14), and a secondary winding (32, 34) arranged to be connected to said beam position correction means.

3. Apparatus according to any one of the preceding claims in which said predetermined path along which said electron beam is scanned comprises a plurality of parallel scan paths extending side by side across said phosphor coating characterised in that

said pilot signal generating means comprises means for generating pilot signals of opposite phases for use in alternate scan paths.

4. Apparatus according to any one of the preceding claims, characterised in that said pilot signal generating means is arranged to modulate said electron beam (33) with a pilot signal in the form m₁ sin wt, wherein $m_1$ is a constant and w corresponds to a frequency which is substantially unoccupied by the spectral lines of video signals used to condition said electron beam to cause the phosphor coating (15) on the tube to emit light.

5. Apparatus according to claim 4, characterised in that said beam position control means includes synchronous demodulation means for multiplying said position control signal produced by said detecting means by said pilot signal and providing a filtered base-band signal to said deflecting means for position correction of said electron beam (33).

6. Apparatus according to any one of the preceding claims, characterised in that said electron gun means is operative to produce a plurality of electron beams, said deflecting means is arranged to deflect each of said electron beams for scanning a different one of a number of paths coincident with the spaces between said conductive strips (12, 14), and the number of parallel conductive strips in each of said first and second groups (12, 14) is equal to the number of said electron beams produced by said electron gun means.

**Patentansprüche**

1. Vorrichtung zur Steurung eines Abtast-Elektronenstrahls (33) in einem Kathodenstrahlröhren-Display, das einen lichtemittierenden Phosphorüberzug (15) an einer Innenfläche eines Schirmträgers (10) der Röhre besitzt und

ein der Kathodenstrahlröhre zugehöriges Elektronenkanonen-System zur Erzeugung eines Electronenstrahls (33) gewünschter Intensität umfaßt, sowie

der Kathodenstrahlröhre zugehörige Ablenkmittel zur Ablenkung des Elektronenstrahls (33), so daß der Elektronenstrahl hauptsächlich entlang eines vorher festgelegten Pfades den Phosphorüberzug (15) abtastet, wobei der Phosphorüberzug Licht emittiert, dessen Intensität der Beschaffenheit des Elektronenstrahls an jedem Punkt des Phosphorüberzugs entspricht, den entlang der Elektronenstrahl abtastet, sowie

eine Reihe räumlich getrennter paralleler Leitstreifen (12, 14) auf dem Schirmträger (10) der Röhre oder auf dem Phosphorüberzug (15), die so angeordnet sind, daß die Zwischenräume zwischen den Leitstreifen (12, 14) mit dem Pfad, den entlang der Elektronenstrahl abtasten soll, übereinstimmen, sowie

Mittel zur Erzeugung von Pilotsignalen, die dem Elektronenkanonen-System zur Modulation des Elektronenstrahls (33) mit einem vorher festgelegten Pilotsignal angeschlossen sind, sowie

an die Leitstreifen (12, 14) angeschlossene Fühler (24, 26) zur Erkennung des Leitsignals für den Fall, daß der Elektronenstrahl (33) von dem vorher festgelegten Pfad abweicht und auf einen der Leitstreifen auftrifft, wobei der Betrag dieser Abweichung größer ist als der Betrag, um den der Elektronenstrahl auf dem benachbarten Leitstreifen entlang des vorher festgelegten Pfades abweicht und

ein Steuersignalgenerator zur Erzeugung eines Einsteuerungssignals, das der Position des Elektronenstrahls entspricht und

Mittel zur Korrektur der Strahlposition, die an den Steuersignalgenerator und an die Ablenkmittel zur Rückführung des Elektronenstrahls auf den vorher festgelegten Pfad in Abhängigkeit des Einsteuerungssignals angeschlossen sind,

dadurch gekennzeichnet, daß der Steuersignalgenerator

Mittel (20, 32; 22, 34) zur Erzeugung zwei phasen-entgegengesetzter Signale ($m_2$ sin wt; $m_2$ sin wt) in Abhängigkeit des modulierten Elektronenstrahls, der auf den benachbarten elektrischen Leitstreifen (12, 14) auftrifft und

Mittel zur Erzeugung eines Einsteuerungssignals gemäß der Amplitudendifferenz der beiden phasenentgegengesetzten Signale umfaßt.

2. Vorrichtung nach Anspruch 1, dadurch gekennzeichnet, daß der Steuersignalgenerator ein Transformatorenpaar (24, 26) umfaßt, wobei jeder Transformator eine Primärwicklung mit Mittelabgriff (20, 22) besitzt, die an die parallelen Leitstreifen (12, 14) angeschlossen sind, sowie eine Sekundärwicklung (32, 34), die so angeordnet ist, daß sie an die Mittel zur Korrektur der Strahlposition angeschlossen werden kann.

3. Vorrichtung nach einem der vorhergehenden Ansprüche, dadurch gekennzeichnet, daß der vorher festgelegte Pfad, den entlang der Elektronenstrahl abtastet, eine Vielzahl parallel angeordneter Abtastpfade umfaßt, die sich nebeneinander über den Phosphorüberzug erstrecken, dadurch gekennzeichnet, daß

die Mittel zur Erzeugung des Pilotsignals Mittel zur Erzeugung phasen-entgegengesetzter Pilotsignale für eine Verwendung in alternierenden Abtastpfaden enthalten.

4. Vorrichtung nach einem der vorhergehenden Ansprüche, dadurch gekennzeichnet, daß die Mittel zur Erzeugung des Pilotsignals so ausgelegt sind, daß sie den Elektronenstrahl (33) mit einem Pilotsignal $m_1$ sin wt modulieren, wobei es sich bei $m_1$ um eine Konstante handelt und w einer Frequenz entspricht, die von den Spektrallinien der Videosignale, die den Elektronenstrahl dahingehend beeinflussen, daß dieser den Phosphorüberzug (15) auf der Röhre veranlaßt, Licht zu emittieren, weitgehend unbesetzt blieben.

5. Vorrichtung nach Anspruch 4, dadurch gekennzeichnet, daß die Strahl-Einsteuerungsmittel synchrone Demodulationsmittel zur Multiplikation des von den Fühlern erzeugten Einsteuerungssignals mit dem Pilotsignal und zur Lieferung eines gefilterten Grundbandbreitensignals an die Ablenkmittel zur Positionskorrektur des Elektronenstrahls (33), umfaßt.

6. Vorrichtung nach einem der vorhergehenden Ansprüche, dadurch gekennzeichnet, daß das Elektronenkanonen-System in der Lage ist, eine Vielzahl von Elektronenstrahl zu erzeugen, die Ablenkungsmittel so ausgelegt sind, daß sie jeden dieser Elektronenstrahl zur Abtastung eines anderen Pfades, deren Anzahl insgesamt mit den Zwischenräumen zwischen den Leitstreifen (12, 14) übereinstimmt, ablenken können und die Anzahl der parallelen Leitstreifen in jeder der beiden ersten und zweiten Gruppen (12, 14) mit der Anzahl der von den Elektronenkanonenmittel erzeugten Elektronenstrahlen übereinstimmt.

## Revendications

1. Dispositif pour commander la position d'un faisceau d'électrons de balayage (33) dans un dispositif d'affichage à tube cathodique du type comportant un revêtement (15) formé d'une substance luminescente et situé sur une surface intérieure d'une plaque avant (10) du tube, et comprenant

des moyens formant canon à électrons, associés audit tube cathodique pour produire un faisceau d'électrons (33) possédant l'intensité désirée,

des moyens déviateurs associés audit tube cathodique de manière à dévier ledit faisceau d'électrons (33) de manière que ce dernier exécute un balayage sensiblement le long d'un trajet prédéterminé sur ledit revêtement (15) formé d'une substance luminescente, ce revêtement formé d'une substance luminescente émettant une lumière, dont l'intensité correspond à une condition dudit faisceau d'électrons en chaque point dudit revêtement, le long duquel ledit faisceau d'électrons exécute son balayage,

une série de bandes conductrices parallèles et espacées (12, 14) situées sur ladite plaque avant (14) dudit tube ou sur ledit revêtement (15) formé d'une substance luminscente, et disposées de telle sorte que les espaces entre lesdites bandes conductrices (12, 14) coïncident avec ledit trajet prédéterminé, le long duquel ledit faisceau d'électrons exécute son balayage,

des moyens de production de signaux pilotes, accouplés auxdits moyens formant canon à électrons pour moduler ledit faisceau d'électrons (33) avec un signal pilote prédéterminé,

des moyens de détection (24, 26) accouplés auxdites bandes conductrices (12, 14) pour détecter lesdits signaux pilotes dans le cas où ledit faisceau d'électrons (33) s'écarte dudit trajet prédéterminé et rencontre l'une desdites bandes conductrices sur une étendue supérieure à l'étendue, sur laquelle le faisceau d'électrons rencontre et bande conductrice adjacente le long dudit trajet prédéterminé, et

un générateur de signaux de commande, servant à produire un signal de commande de position correspondant à la position dudit faisceau d'électrons, et

des moyens de correction de la position du faisceau, accouplés audit générateur de signaux de commande et auxdits moyens déviateurs pour ramener ledit faisceau d'électrons sur ledit trajet prédéterminé en réponse audit signal de commande de position, caractérisé en ce que ledit générateur de signaux de commande comprend

des moyens (20, 32; 22, 34) servant à produire deux signaux ($m_2 \sin \omega t$; $-m_2 \sin \omega t$) possédant des phases opposées, en réponse au fait que ledit faisceau d'électrons modulé rencontre lesdites bandes électriquement conductrices adjacentes (12, 14), et

des moyens pour produire ledit signal de commande de position en fonction de la différence entre les amplitudes desdites deux signaux possédant des phases opposées.

2. Dispositif selon la revendication 1, caractérisé en ce que ledit générateur du signal de commande inclut un couple de transformateurs (24, 26), dont chacun comporte un enroulement primaire à prise centrale (20, 22) raccordé auxdites bandes conductrices parallèles (12, 14), et un enroulement secondaire (32, 34) agencé de manière à être raccordé auxdits moyens de correction de la position du faisceau.

3. Dispositif selon l'une quelconque des revendications précédentes, dans lequel ledit trajet prédéterminé, le long duquel ledit faisceau d'électrons exécute son balayage comprend une pluralité de trajets parallèles de balayage s'étendant d'un côte à l'autre sur ledit revêtement formé d'une substance luminescente, caractérisé en ce que

lesdits moyens de production de signaux pilotes comprennent des moyens pour produire des signaux pilotes possédant des phases opposées et destinés à être utilisés sur des trajets de balayage alternés.

4. Dispositif selon l'une quelconque des revendications précédentes, caractérisé en ce que lesdits moyens de production des signaux pilotes sont agencés de manière à moduler ledit faisceau d'électrons (33) avec un signal pilote possedant la forme $m_1 \sin wt$, $m_1$ étant une constante et w une fréquence qui est sensiblement inoccupée dans les raies spectrales de signaux vidéo utilisés pour conditionner ledit faisceau d'électrons de manière à amener le revêtement (15) formé d'une substance luminance et placé sur le tube à émettre une lumière.

5. Dispositif selon la revendication 4, caractérisé en ce que lesdits moyens de commande de la position du faisceau incluent des moyens de démodulation synchrone servant à multiplier ledit signal de commande de position produit par lesdits moyens de détection, par ledit signal pilote et envoyer un signal de bande de base filtré auxdits moyens déviateurs pour corriger la position dudit faisceau d'électrons (33).

6. Dispositif selon l'une quelconque des revendications précédentes, caractérisé en ce que lesdits moyens formant canon à électrons fonctionnent de manière à produire une pluralité de faisceaux d'électrons, que lesdits moyens déviateurs sont agencés pour dévier chacun desdits faisceaux d'électrons afin qu'ils valident chacun un trajet différent faisant partie d'un ensemble de trajets qui coïncident avec les espaces présents entre lesdites bandes conductrices (12, 14), et que le nombre de bandes conductrices parallèles dans chacun desdits premier et second groupes (12, 14) est égal au nombre desdits faisceaux d'électrons produits par lesdits moyens formant canon à électrons.

# FIG.1

FROM DISPLAY
PROCESSING CIRCUITRY

MULTI-BEAM
CATHODE DRIVE

VERTICAL DEFLECT-
ION SYSTEM FOR
POSITION
CONTROL

SUM

PILOT
SIGNAL
$m_1$ sin wt

$V_1$

34  26
30
14
22
15
15
12  33
18B
18A
20
24  28
32  TUBE
FACE 10
$V_2$  40

40

42

42

SUM

PHASE
CHANGE
($\emptyset T/2$)

AMPLIFIER

LINE
FLYBACK

SAMPLE
& HOLD

FILTER,
AMPLIFIER
&
SYNCHRONOUS
DEMODULATOR

$m_1$ sin (wt+$\emptyset_T/2$)

1

FIG.2

FIG.3

# FIG.4

10
15
14
12
16
14
12

# FIG.5

10  A  B  14' C
15'
14'
15'
G1
12'
15'
12'
15'
G2
14'
15'
G3

FIG.6

4

# FIG.7

GUARD STRIPS ⟍                    14"

16" ⟍  GREEN                      14"

BLUE                              14"

NON-LUMINESCING   G1                18B"

RED

GREEN

BLUE

RED

GREEN

18A"  BLUE

NON-LUMINESCING   G2

RED

GREEN

BLUE

RED

GREEN

BLUE

NON-LUMINESCING   G3

CONDUCTIVE GROUP 12"

CONDUCTIVE GROUP 14"

EP 0 172 722 B1